# EUROPEAN PATENT APPLICATION

(11) **EP 0 763 934 A2**
(43) Date of publication of application: **19.03.1997**
(21) Application number: 96114563.8
(22) Date of filing: 11.09.1996
(51) Int. Cl.: H04N 5/445

(54) **System for on-screen-display**

(30) Priority: 14.09.1995 JP 236230/95
(71) Applicant: PIONEER ELECTRONIC CORPORATION, Meguro-ku Tokyo (JP); Pioneer Video Corporation, Nakakoma-gun, Yamanashi-ken (JP)
(72) Inventor: Kuriki, Shinji, c/o Pioneer Video Corp., Kohfu-shi, Yamanashi-ken (JP); Shimizu, Akira, c/o Pioneer Video Corp., Kohfu-shi, Yamanashi-ken (JP); Hoshino, Yasushi, c/o Pioneer Video Corp., Kohfu-shi, Yamanashi-ken (JP)
(74) Representative: Sajda, Wolf E., Dipl.-Phys.

(57) **Abstract**

In on-screen-display (OSD), characters and graphic images selected by an operator from predetermined characters and graphic images are reproduced on a display (14a) such as a liquid crystal display. A font code memory (24) is provided for storing a font code (Da) of a character or a graphic image input by the operator. A graphic font detector (40) is provided for detecting whether the stored font code is a character font or a graphic font. A font data memory (25) stores a plurality of font data (Dc) for reproducing the predetermined characters and the graphic images. Font data (Dc) read from the font data memory (25) are loaded on shift registers (6A) and applied to the display (14a) in order to reproduce the stored font data.

## Description

### BACKGROUND OF THE INVENTION

The present invention relates to a system for on-screen-display for a video system such as a television, a VTR, and a monitor display, and more particularly to a character and graphic video signal generating system using character fonts and graphic fonts for on-screen-display (hereinafter called OSD). The OSD system is provided for reproducing a character selected by an operator from a set of character fonts on a display.

Here, the "character" mainly means English alphabet, numeral, Japanese syllabary, Chinese character, and further includes mark, symbol.

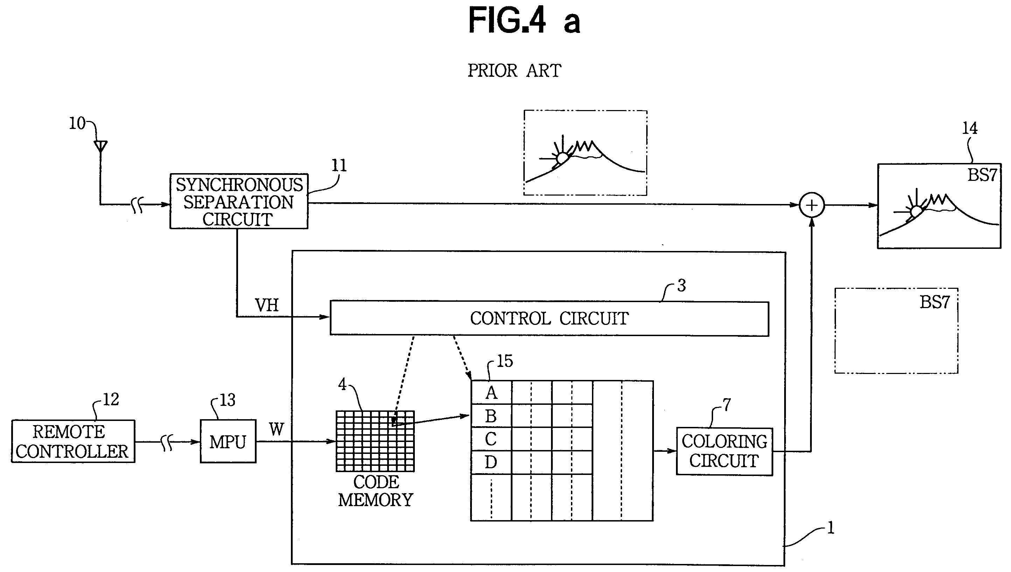

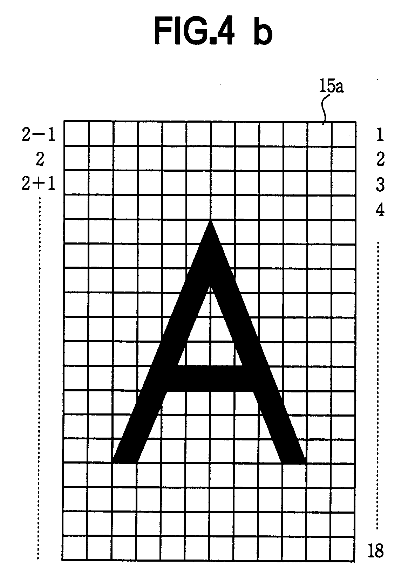

Fig. 4a shows a conventional character video signal generating system for the OSD employed in a television. A video signal generator 1 comprises a control circuit 3, a font code memory (RAM) 4 for storing character font codes, and a font data memory (ROM) 15 storing a plurality of character font data. Addresses of the font code memory 4 are corresponded to positions of a matrix on a liquid crystal display (LCD) 14.

In operation, a video signal of a channel selected by an operator is transmitted to the television through an antenna 10. The video signal is applied to a synchronous separation circuit 11 so that vertical and horizontal synchronizing signals VH are separated. The vertical and horizontal synchronizing signals VH are applied to the control circuit 3.

When a remote controller 12 is operated, an MPU (microprocessor) 13 generates a write signal W which is applied to the font code memory 4 of the video signal generator 1. The write signal W includes character font codes of a character selected by the operator and an address in the font code memory 4 which corresponds to a position on the LCD 14 on which the operator desires to reproduce the character. Thus, the character font code is written in the font code memory 4 at the address.

The control circuit 3 is operated in accordance with the vertical and horizontal signals VH to address the font code memory 4 to read the character font code. The read out font code includes the address of the selected position on the LCD.

Fig. 4b shows a unit font cell 15A in the font data memory 15. Each unit font cell 15A comprises memory cells of 18 lines X 12 bits. The control circuit 3 produces a leading address signal to read a font data stored in the font data memory 15 in accordance with the read out character font code. The read out font data is fed to a coloring circuit 7 at which a color signal is added to the font data. Thus, a character video signal is generated based on the font data for displaying character such as a channel number. The character video signal is superimposed on the video signal so that a combined image is displayed on the LCD 14.

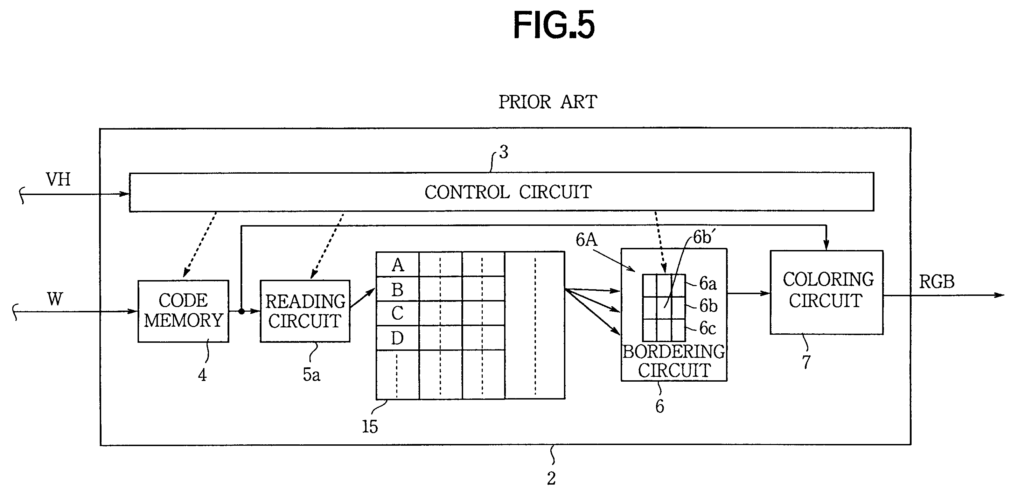

Fig. 5 shows another conventional character video signal generating system of a character font. A video signal generator 2 comprises the control circuit 3, the font code memory 4, the font data memory 15, the coloring circuit 7, and a font reading circuit 5a.

In order to improve a sharpness of the displayed character, the character video signal generating system is provided with a bordering circuit 6. The bordering circuit 6 is provided for applying a black border to the periphery of the character on the LCD. The bordering circuit has a shift register set 6A comprising three sets of shift registers 6a, 6b and 6c each of which comprises three shift registers.

In operation, the font reading circuit 5a is operated by the control circuit 3 for sequentially reading memory cells in the font data memory 15. In the unit font cell 15A, 18 lines are red out three by three. Referring to Fig. 4b, when the line number 2 is read, line 2-1, line 2, and line 2+1 are sequentially read. The read font data of three lines are applied to the bordering circuit 6. The shift registers 6a, 6b and 6c of the bordering circuit 6 are operated by the control circuit 3 to load the three lines data of 12 bits in parallel in order. The three lines are read three times, and read out data are sent to the next shift registers in order. The data loaded on the central shift register 6b' is used to form the character "A". The data loaded on three line registers are used to form borders of the character "A". Outputs of the bordering circuit 6 are applied to the LCD through the coloring circuit 7.

Then, the next line number 3 is read in the same manner as the line 2. Namely, the line 3-1, line 3, and line 3+1 are read.

The above described conventional systems can reproduce colored characters. However, the systems can not reproduce graphic images.

### SUMMARY OF THE INVENTION

An object of the present invention is to provide an OSD system which can reproduce a graphic image.

According to the present invention, there is provided a system for on-screen-display for reproducing characters and graphic images selected by an operator from predetermined characters and graphic images on a display, the system comprising control means for controlling operation of the system, a font code memory for storing a font code of a character or a graphic image inputted by the operator, which includes a position to be reproduced on the display, detector means for detecting whether the stored font code is a character font or a graphic font, a font data memory storing a plurality of font data for reproducing the predetermined characters and the graphic images, font read control means applied with a read font code and control signals from the control means for reading a font data corresponding to the read font code, storing means for storing read font data, a selector operated by result of the operation of the detector means for applying stored font data to the display in order to reproduce the stored font data.

The font data memory includes graphic font data memory cells divided into three primary colors for coloring the font data, and the font data memory comprises a plurality of unit font data memory cells each of which comprises a plurality of memory cells arranged in matrix. The storing means comprises a plurality of shift registers.

The system further comprises bordering means for applying a border on a periphery of a character derived from the storing means.

These and other objects and features of the present invention will become more apparent from the following detailed description with reference to the accompanying drawings.

### BRIEF DESCRIPTION OF DRAWINGS

Fig. 1 is a block diagram showing a system for the OSD according to the present invention;
Fig. 2 is a block diagram showing a preceding half of the system of Fig. 1;
Fig. 3 is a block diagram showing a following half of Fig. 1;
Fig. 4a is a block diagram showing a conventional character video signal generating system employed in a television;
Fig. 4b shows a unit font cell in a font data memory; and
Fig. 5 is a block diagram showing another conventional character video signal generating system.

### DETAILED DESCRIPTION OF THE PREFERRED EMBODIMENT

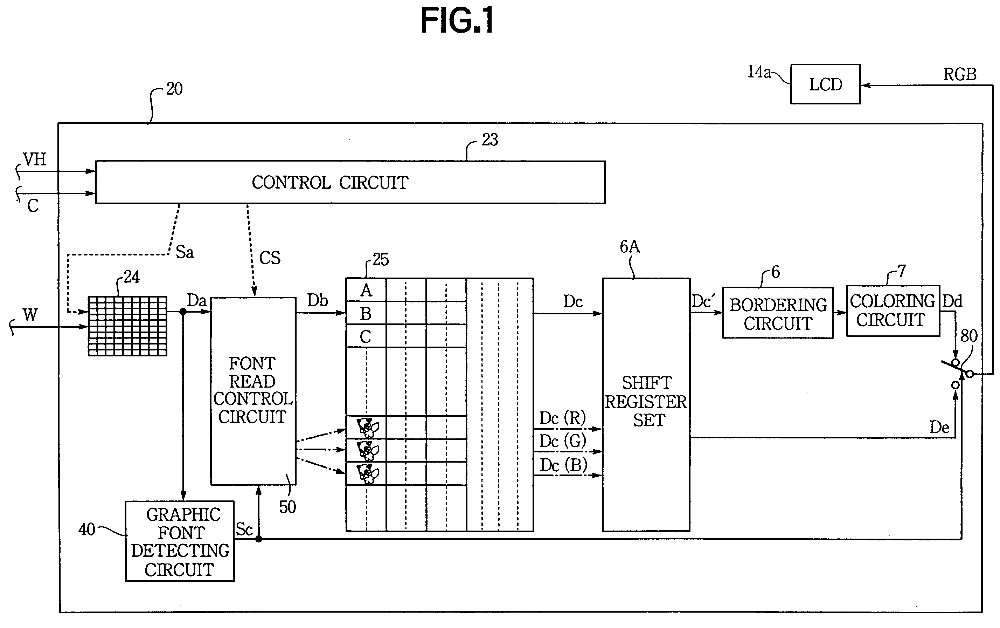

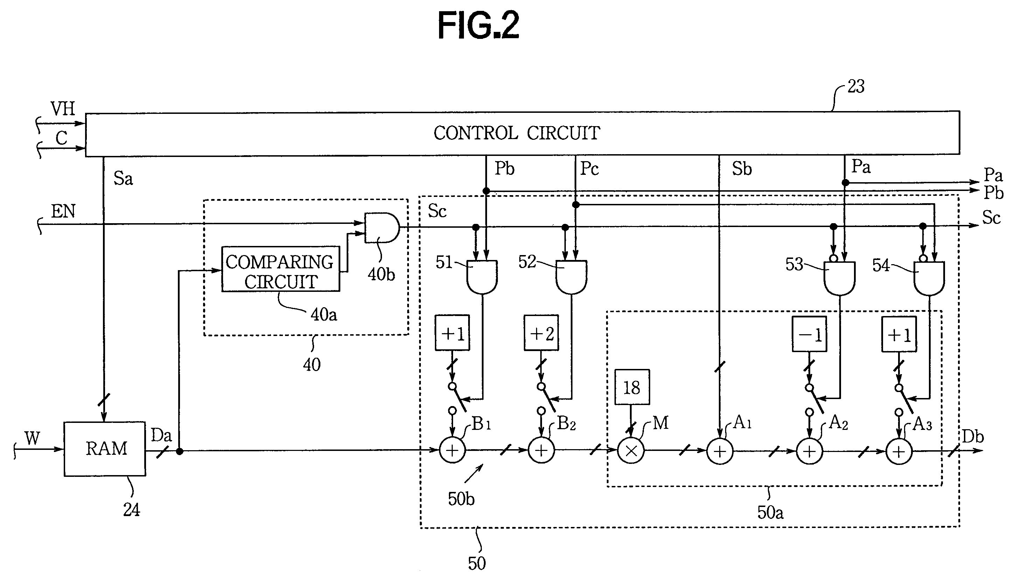

Referring to Figs. 1 and 2, an OSD system 20 of an embodiment of the present invention is operatively connected to a microcomputer (not shown). The OSD system 20 comprises a control circuit 23, a font code memory (RAM) 24, a font data memory 25, shift register set 6A, bordering circuit 6, and coloring circuit 7. The OSD system 20 further has a graphic font detecting circuit 40 for detecting whether an inputted font is a graphic font or a character font, a font read control circuit 50, and a selector 80. The shift register set 6A, bordering circuit 6 and coloring circuit 7 are the same as those of the conventional system of Fig. 5.

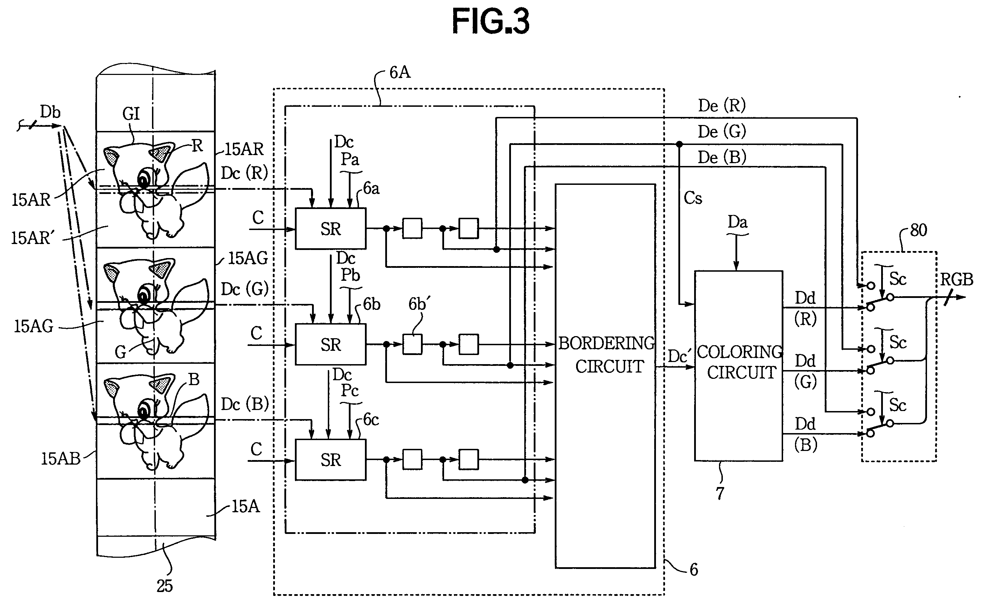

The font data memory 25 is a ROM such as a mask ROM, PROM, or EEPROM for storing font data. The OSD system has an LCD 14a having pixels arranged in a matrix of 12 rows X 24 columns. One unit font data memory cell 15A in the font data memory 25 is composed by 18 lines and 12 bits. The unit font data memory cell 15A forms the pixel on the LCD 14a. Namely, the font data memory 25 has 288 memory cells. For example, the memory cells from 1 to 200 represent ordinary character fonts such as "A", "B" ..., and the memory cells from 201 to 288 represent graphic fonts including parts of graphic fonts. Each graphic font comprises three units of font memory cells 15A for three primary colors of R, G and B. As shown in Fig. 3, a graphic image is, for example, formed by four memory cells 15A.

The control circuit 23 is applied with the vertical and horizontal signals VH and a clock C for operating the OSD system.

The control circuit 23 produces an address signal Sa which is applied to the font code memory 24 for addressing the memory so as to read a font code in the font code memory stored by an operator. A control signal is applied to the font read control circuit 50 for controlling the reading of the font data stored in the font data memory 25.

Referring to Figs. 2 and 3, the control circuit 23 further produces three load pulses Pa, Pb and Pc applied to the font read control circuit 50 and the shift registers 6a, 6b and 6c of the shift register set 6A. The load pulses Pa, Pb and Pc represent the order of timing for loading the read out font data on the three shift registers 6a, 6b and 6c, respectively. The font data read from the upper unit font data memory cell (a) (Fig. 3) is loaded on the shift register 6a by the pulse Pa, data from a middle unit memory cell (a+1) is loaded on the shift register 6b by the pulse Pb later than the timing of the pulse Pa, and a lower unit memory cell (a+2) is loaded on the shift register 6c by the pulse Pc later than the timing of the pulse Pb.

Furthermore, the clock C is produced corresponding to the horizontal scanning, and applied to the shift registers 6a, 6b, 6c to shift the shift registers.

The font code memory 24 comprises a RAM memory cells of which are arranged in the same matrix as the LCD 14a similar to the font code memory 4. In the font code memory 24, character codes and graphic codes are stored by operating the microcomputer by an operator. Stored font data are read by address signal Sa at a timing without interference with the write signal W.

The graphic font detecting circuit 40 is provided for detecting graphic font based on the font code Da read from the font code memory 24. The graphic font detecting circuit 40 comprises a comparing circuit 40a applied with the font code Da, and a gate 40b applied with an enable signal EN which is inputted by the operator. The comparing circuit 40a compares a font code Da with a reference value. When the font code Da is a graphic font code, the gate 40b produces a graphic font signal Sc.

The font read control circuit 50 is provided for producing a font reading address signal Db in accordance with the font code Da and the graphic font signal Sc for reading a font data Dc stored in the font data memory 25. The font read control circuit 50 comprises a character font reading circuit 50a, a graphic font reading circuit 50b, and four gates 51, 52, 53 and 54.

The load pulse Pa of the control circuit 23 is applied to the gate 53, the load pulse Pb is applied to the gate 51, and the load pulse Pc is applied to the gates 52 and 54. The graphic font signal Sc is applied to the gates 51 to 54, respectively. When the graphic font signal Sc is a high level, the gates 51 and 52 are opened. When the graphic font signal Sc is a low level, the gates 53 and 54 are opened.

The character font reading circuit 50a comprises a multiplier M for multiplying the font code Da by 18, and three adders A1, A2 and A3. The adder A1 is applied with a line number signal Sb from the control circuit 23. The adder A2 is connected to the gate 53 and operated to add -1 to the font code Da. The adder A3 is connected to the gate 54 and operated to add +1 to the font code Da.

The graphic font reading circuit 50b comprises an adder B1 connected to the gate 51 and operated to add +1 to the font code Da, and an adder B2 connected to the gate 52 and operated to add +1 to the font code Da.

Each of the font reading address signals Db is produced in order at the corresponding timing of the load pulse Pa, Pb or Pc, and applied to the font data memory 25.

when detecting a character font, the font reading address signal Db reads a character font data Dc of three lines of a designated unit font data memory cell 15A in order. When detecting a graphic font, the font reading address signal Db reads font data Dc (R) of lines of an upper unit font data memory cell (a), font data Dc (G) of lines of a middle memory cell (a+1), and a font data Dc (B) of lines of a lower memory cell (a+2).

Both of the read character font data Dc and the read graphic font data Dc (R), Dc (G), Dc (B) are load on the shift registers 6a, 6b, 6c in order by the pulses Pa, Pb and Pc, as aforementioned. The shift registers are operated to shift the data to the next shift registers in accordance with the clock C. The character font data stored in the three sets of the shift register are applied to the bordering circuit 6.

In the coloring circuit 7, the character font data Dc' are applied with color signal in accordance with the color information of the character font code Da for producing character video signals Dd (R), Dd (G) and Dd (B).

The read graphic font data Dc (R), Dc (G), Dc (B) stored in the shift registers are applied to the selector 80 as graphic character video signals De (R), De (G), De (B).

The selector 80 is provided for selecting graphic video signals De (R), De (G), De (B) and character video signals Dd (R), Dd (G), Dd (B) to produce a character video signal RGB.

Consequently, in the OSD system 20, when the character font, the character video signal RGB is produced based on the character font data Dc'. When the graphic font, the character video signal RGB is produced based on the graphic font data stored in the shift registers.

The operation of the OSD system 20 will be described.

As described above, the control circuit 23 produces an address signal Sa which is applied to the font code memory 24 for addressing the memory to read a font code. Thus, the font code memory 24 produces a character font code or graphic font code Da to be displayed.

Describing the operation for the character font first, the detecting circuit 40 produces the graphic font signal Sc of low level.

In the font read control circuit 50, the line number signal Sb for the line a is applied to the adder A1. When the load pulse Pa for the line a-1 of the unit font data memory cell 15A is applied to the gate 53, since the graphic font signal Sc is a low level, the gate 53 is opened. Thus, -1 is added to the character font code Da. Thus, the font reading address signal Db is applied to the line a-1 of the memory cell 15A so as to read the character font data Dc of the line a-1. If the character font is "A", font data in the memory cell of character "A" based on the character font code for "A" are read. Similarly, font data of the lines a and a+1 are read. The read font data Dc are applied to the shift register 6a to 6c in order. When the line a is read, the load pulse Pb is directly applied to the memory cell 15A.

When the load pulse Pb is applied to the gate 51, the gate 51 is closed by the signal Sc of the low level, so that the adder B1 is not operated.

When the load pulse Pc is applied to the gate 52, the gate 52 is closed by the low level signal Sc.

The reading of the font data is performed three times. The three font data Dc of each line are shifted to the next shift register in synchronism with the clock C in order. The three font data stored in the shift registers of each line are applied to the bordering circuit 6 so that the peripheries of the character "A" is bordered. The bordered font data Dc' are applied to the coloring circuit 7 to be colored corresponding to the font code Da when a character signal Cs is fed from the central shift register 6b' for the line a. Thus, the coloring circuit 7 generates character video signals Dd of the one line which are selected by the selector 80.

When 18 times of the horizontal scanning are finished, the character "A" is entirely displayed on the LCD 14a. The other characters are produced in the same manner as the above operation.

In the character font, the character having the border is displayed in the same manner as the conventional system.

The operation for the graphic font will be described. When a graphic font code Da is read from the font code memory 24, the detecting circuit 40 produces the graphic font signal Sc of a high level. The enable signal EN is also at a high level.

In the font read control circuit 50, when the load pulse Pa is applied to the gate 53, since the graphic font signal Sc is high, the gate 51 is closed. Thus, the adder A2 is not operated. When the load pulse Pa for the first line a-1 is produced, the graphic font code Da is applied to the font data memory 25 without added +1 or +2 to read the graphic font data Dc based on the graphic font code. The read graphic font data Dc is stored in the shift register 6a. For example, the line a-1 of a memory cell 15AR for red parts of a graphic image GI is read.

When the load pulse Pb for the line a is applied to the gate 51, the gate 51 is opened by the high level signal Sc, so that +1 is added to the font code Da. Thus, the font reading address signal Db for the line a is produced, which is applied to the font data memory 25. The font data Dc of the line a is read from the font data memory 25 and stored in the shift register 6b.

When the load pulse Pc for the line a+1 is applied to the gates 52 and 54, the gate 52 is opened. Thus, +2 is added to the graphic font code Da so that the font reading address signal Db is applied to the font data memory 25. The font data Dc of the line a+1 is read and stored in the shift register 6c.

The next memory cell 15AR' is read by multiplying the font code Da by 18 (the number of the line). Similarly, graphic font data in the green memory cell 15AG and the blue memory cell 15AB are read. The read three font data Dc are colored in accordance with the inputted code. Thus, the graphic video signals De (R), De (G) and De (B) are produced and selected by the selector 80.

Consequently, the graphic image video signals GRB of one row are produced.

In the graphic font, the color is variously set at every dot of the font.

In accordance with the present invention, the circuits for the character font and the graphic font are commonly used. Consequently, the size of the circuit for the OSD system is small in size.

While the invention has been described in conjunction with preferred specific embodiment thereof, it will be understood that this description is intended to illustrate and not limit the scope of the invention.

## Claims

1. A system for on-screen-display (OSD) for reproducing characters and graphic images selected by an operator from predetermined characters and graphic images on a display, the system comprising:
- control means (23) for controlling operation of the OSD system (20);
- a font code memory (24) for storing a font code (Da) of a character or a graphic image which includes a position to be reproduced on the display;
- detector means (40) for detecting whether the stored font code (Da) is a character font or a graphic font;
- a font data memory (25) storing a plurality of font data (Dc) for reproducing the predetermined characters and the graphic images;
- font read control means (50) applied with a read font code and control signals from the control means (23) for reading a font data corresponding to the read font code;
- storing means (6A) for storing read font data;
- a selector (80) operated by result of the operation of the detector means (40) for applying stored font data to the display in order to reproduce the stored font data.

2. The system acording to claim 1,
wherein the font data memory (25) includes graphic font data memory cells (15AR, 15AB, 15AG) divided into three primary colors for coloring the font data.

3. The system according to claim 1 or 2,
further comprising bordering means (6) for applying a border on a periphery of a character derived from the storing means (6A).

4. The system according to any of claims 1 to 3,
wherein the font data memory (25) comprises a plurality of unit font data memory cells each of which comprises a plurality of memory cells arranged in matrix.

5. The system according to any of claims 1 to 4,
wherein the storing means (6A) comprises a plurality of shift registers (6a, 6b, 6c).
